# EUROPÄISCHE PATENTANMELDUNG

(11) **EP 1 502 557 A1**
(43) Veröffentlichungstag der Anmeldung: **02.02.2005**
(21) Anmeldenummer: 04017911.1
(22) Anmeldetag: 29.07.2004
(51) Int. Cl.: A61C 1/14

(54) **Dichtung für ein medizinisches Handstück**

(30) Priorität: 31.07.2003 AT 12142003
(71) Anmelder: W & H Dentalwerk Bürmoos GmbH, 5111 Bürmoos (AT)
(72) Erfinder: Schatz, Norbert, 5111 Bürmoos (AT); Hochradl, Gerhard, 5120 St. Pantaleon (AT)

(57) **Zusammenfassung**

Die vorliegende Erfindung betrifft eine im Bereich des werkzeugseitigen Endes eines Handoder Winkelstückkopfs (1, 100) angeordnete Dichtung (20) zum Abdichten des Innenraums von Hand- oder Winkelstücken. Die Dichtung (20) ist gekennzeichnet durch eine Feder (21), die eine Flachdichtung (22) aus elastisch komprimierbarem Material, bevorzugt Gummi, gegen ein handstückfestes Bauteil (7) vorspannt und einer in unmittelbarer Nähe zur Dichtung angeordneten Schleuderscheibe (11).

Weiters betrifft die Erfindung ein medizinisches Hand- oder Winkelstück mit einer derartigen Dichtung (20).

## Beschreibung

Die vorliegende Erfindung betrifft eine im Bereich des werkzeugseitigen Endes eines Hand- oder Winkelstückkopfs angeordnete Dichtung zum Abdichten des Innenraums von Hand- oder Winkelstücken.

Die Notwendigkeit zur Abdichtung besteht sowohl wegen der Gefahr der Übertragung von mit Körperflüssigkeiten wie Blut oder Speichel in die Hand- oder Winkelstücke eingedrungenen Krankheitserregern zwischen Patienten, als auch zum Schutz der in den Hand- oder Winkelstücken angeordneten Bauteile, wie beispielsweise der Spannvorrichtung, den Lagern und den Antriebswellen, vor Verschmutzung und Beschädigungen durch bei der Behandlung gelöstes Gewebe, zum Beispiel Knochensplitter, oder während der Behandlung eingesetzter Substanzen, zum Beispiel Behandlungspasten. Auch der Rückhalt von Schmiermitteln aus Lagern in den Hand- oder Winkelstücken insbesondere während der Behandlung muß durch die Dichtung gewährleistet sein.
Das grundlegende Problem der Abdichtung der Hand- oder Winkelstücke zur Umgebung besteht darin, daß aus dem Kopf Werkzeuge ragen, die über einen Antrieb in Bewegung versetzt sind, zum Beispiel rotierende Bohrer, Bürsten, Prophy-Cups u.a. Um einen sicheren Betrieb der Hand- oder Winkelstücke mit geringem Verschleiß, geringer Lärmentwicklung usw. zu gewährleisten, sind das rotierende Werkzeug und damit verbundene Bauteile, wie zum Beispiel die Antriebswelle und die Spindel, von nicht rotierenden, handstückfesten Bauteilen, wie zum Beispiel der Außenhülse und den Lagern, beabstandet. Durch die zwischen den handstückfesten und den bewegten Bauteilen gebildeten Spalten können die oben angeführten Partikel und Verschmutzungen in die Hand- und Winkelstücke eindringen.
Um den Strom an eindringender Verschmutzung möglichst gering zu halten, sind verschiedene Vorrichtungen bekannt, die in unterschiedlichen Anwendungsgebieten, zum Beispiel der Implantologie, Prophylaxe oder zur spanabhebenden Bearbeitung von Gewebe, zum Einsatz kommen:
Sehr häufig werden an den Spalten zwischen den rotierenden und den handstückfesten Bauteilen Labyrinthdichtungen eingesetzt, siehe beispielsweise EP 997 110 A2. Nachteilig ist dabei, daß zwischen den Bauteilen der Labyrinthdichtung wiederum Spalten vorhanden sind, durch die zumindest kleine Partikel und Flüssigkeiten sowie darin gelösten und dispergierten Stoffe in das Innere des Hand- oder Winkelstücks gelangen.
Mittels Schleuderscheiben wird versucht Partikel und Verschmutzungen vom Kopfbereich des Hand- oder Winkelstücks fernzuhalten bzw. wegzuschleudern. Derartige Schleuderscheiben sind daher an rotierenden Bauteilen, z.B. der Antriebswelle, oder am Werkzeug selbst angebracht, siehe beispielsweise US 6.350.124 B1, Figuren 7A - 7C. Auch hier besteht jedoch wieder ein Abstand zwischen der rotierenden Schleuderscheibe und handstückfesten Bauteilen, durch den Verschmutzungen in das Innere des Hand- oder Winkelstücks eindringen.
Bei Prophylaxe-Winkelstücken zum Polieren der Zahnoberfläche ist ein besonders gute Abdichtung notwendig, da die zum Polieren verwendete Behandlungspaste durch das Werkzeug (ein sogenanntes Prophy-Cup) in unmittelbarer Nähe zum Winkelstückkopf verteilt wird. In der Patentschrift US 3.436.830 wird dafür ein mit dem Werkzeug rotierender Dichtring vorgeschlagen, dessen ringförmiger Fortsatz in das werkzeugseitige Ende des Winkelstückkopfs ragt. Der Dichtring wird durch eine Schürze des Prophy-Cups gegen den Winkelstückkopf gedrückt.
In der Patentschrift US 5.642.995 ist auf den Kopf des Winkelstücks eine Kappe mit einer Schneide aufgesetzt, die sich beim Einschrauben des Cups in die Werkzeugkupplung in einen ringförmigen Fortsatz des Prophy-Cups schneidet.
Nachteilig ist bei beiden Schriften, daß jeweils speziell geformte Prophy-Cups mit Fortsätzen notwendig sind. Insbesondere die in der US '830 beschriebene Dichtung benötigt eine sehr hohe Fertigungsgenauigkeit (geringe Toleranz) der Schürze, um auf den Dichtring die zur Abdichtung passende Kraft auszuüben.

Der vorliegenden Erfindung liegt daher die Aufgabe zugrunde eine verbesserte Dichtung zu schaffen. Insbesondere soll die Dichtung universell in unterschiedlichen Hand- oder Winkelstücken, zum Beispiel für die Implantologie, Prophylaxe oder zur spanabhebenden Bearbeitung von Gewebe, einsetzbar sein, wodurch eine Verringerung der Produktionskosten erreicht wird. Für Prophylaxe-Winkelstücke soll die Dichtung so ausgebildet sein, daß spezielle Ausformungen am Prophy-Cup nicht notwendig sind, wodurch der Anwender bei der Wahl der Cups größere Freiheit erhält.

Diese Aufgabe wird gemäß der vorliegenden Erfindung durch eine Dichtung mit den Merkmalen des Anspruchs 1 und einem Hand- oder Winkelstück nach Anspruch 6 gelöst.
Um eine größtmögliche Dichtwirkung zu erzielen wird bei der erfindungsgemäßen Dichtung eine Flachdichtung, bevorzugt in Form einer Dichtscheibe, mit einer Feder gegen ein handstückfestes Bauteil vorgespannt. Die Flachdichtung besteht aus elastisch komprimierbarem Material, bevorzugt Gummi. Dies ermöglicht die Abmessungen der Flachdichtung so zu wählen, daß sie bei der Montage durch die sie umgebenden Bauteilen leicht komprimiert wird und im verbauten Zustand insbesondere an den handstückfesten Bauteilen sehr eng anliegt, wodurch eine besonders hohe Dichtwirkung erzielt wird. Die Feder, die die Flachdichtung gegen handstückfeste Bauteile vorspannt, verstärkt die Dichtwirkung der Flachdichtung noch zusätzlich und insbesondere in Richtung des werkzeugseitigen Endes des Hand- oder Winkelstückkopfs.
In unmittelbarer Nähe zur Flachdichtung, bevorzugt in direktem Kontakt mit der Flachdichtung, ist eine Schleuderscheibe angeordnet. Durch den direkten Kontakt mit der Flachdichtung und dem damit sehr geringen Abstand zum Kopf des Hand- oder Winkelstücks verhindert bereits die Schleuderscheibe das Eindringen eines Großteils der Verschmutzung. Jene Partikel oder Flüssigkeitstropfen, die in den Spalt zwischen der Schleuderscheibe und dem Kopf des Handoder Winkelstücks gelangen, werden durch die Flachdichtung, die eng an die sie umgebenden Bauteile angeschmiegt ist, an einem Weiterkommen in das Innere des Hand- oder Winkelstücks gehindert. Die Feder kompensiert zusätzlich selbsttätig einen möglichen Verschleiß der Flachdichtung durch ein Vergrößern des Federwegs und gewährleistet damit auch eine gleichbleibend gute Dichtwirkung.
Um den Verschleiß der Flachdichtung im Kontaktbereich mit der Schleuderscheibe zu minimieren und damit auch nach längerer Verwendung der erfindungsgemäßen Dichtung die Dichtwirkung zu erhalten und um eine optimale Kraftübertragung von der Feder auf die Flachdichtung zu erreichen, werden in einem bevorzugten Ausführungsbeispiel zwischen der Flachdichtung und der Schleuderscheibe und/oder zwischen der Flachdichtung und der Feder Beilagscheiben, bevorzugt aus Metall, angeordnet.

Die Erfindung wird nachfolgend anhand bevorzugter Ausführungsbeispiele und Bezug nehmend auf die beigefügten Zeichnungen erläutert:
Figur 1 zeigt den Kopf eines Prophylaxe-Winkelstück mit der erfindungsgemäßen Dichtung.
Figur 2 zeigt die erfindungsgemäße Dichtung vergrößert in Schnittdarstellung.
Figur 3 zeigt den Kopf eines Winkelstücks zur spanabhebenden Bearbeitung von Gewebe mit der erfindungsgemäßen Dichtung.

In allen Figuren sind gleiche Bauteile mit den gleichen Ziffern beschriftet.

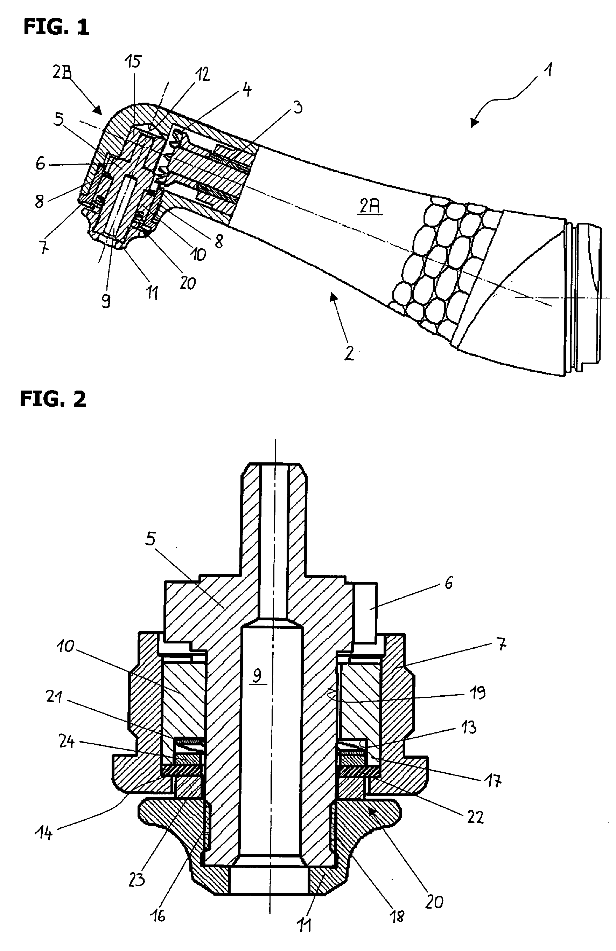

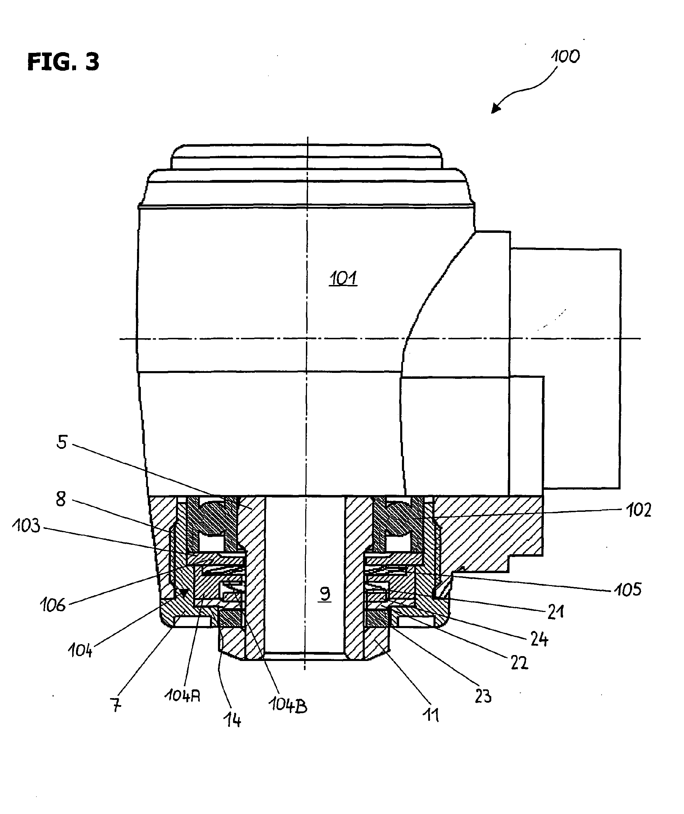

Der in Figur 1 dargestellt Kopf 1 eines Prophylaxe-Winkelstücks besteht aus einer Außenhülse 2 mit einem Griffhülsenabschnitt 2A und einem daran anschließenden, abgewinkeltem Kopfhülsenabschnitt 2B. Im Griffhülsenabschnitt 2A ist eine Antriebswelle (Mitteltrieb) 3 angeordnet, die von einem Motor (nicht dargestellt), zum Beispiel einem Luftmotor, in Rotation versetzt wird. In einer Bohrung 12 des Kopfhülsenabschnitts 2B ist über zwei Gleitlager 10, 15 eine weitere Antriebswelle (Obertrieb) 5 gelagert. Das distale Ende des Obertriebs ist als Werkzeugaufnahme 9 ausgebildet, in die über ein Schraubgewinde ein Propyhlaxe-Werkzeug eingesetzt werden kann. Am distalen Ende der Werkzeugaufnahme 9 ist eine Schleuderscheibe 11 angeordnet, bevorzugt ist diese lösbar mit der Werkzeugaufnahme 9 verbunden, zum Beispiel über eine Schraub- oder Steckverbindung. Die Rotationsbewegung des Mitteltriebs 3 wird über die Zahnräder 4 und 6 auf den Obertrieb 5, das Werkzeug und die Schleuderscheibe 11 übertragen. In einer Aussparung 13 (Figur 2) des Gleitlagers 10 sind Teile der erfindungsgemäßen Dichtung 20 gelagert. Der Obertrieb 5, die beiden Lager 10, 15 sowie die Dichtung 20 werden in der Bohrung 12 über einen Schraubring 7, der mittels eines Gewindes 8 in den Kopfhülsenteil 2B geschraubt ist, fixiert. In Figur 2 ist zu erkennen, daß der Schraubring 7 dazu an seiner der Werkzeugaufnahme zugewandten Seite eine Schulter 14 aufweist, die die Flachdichtung 22 der Dichtung 20 aufnimmt. Über die Nase 17 des unteren Gleitlagers 10, das in den Schraubring 7 durch Preßpassung eingefügt wird, wird die Flachdichtung 22 gegen die Schulter 14 geklemmt. In der Aussparung 13 des unteren Gleitlagers 10 sind eine Feder 21 und eine Beilagscheibe 24 aufgenommen. Die Feder 21, bevorzugt eine Blattfeder, übt auf die Flachdichtung 22 eine Kraft in Richtung distalem Ende der Werkzeugaufnahme 9 aus und preßt die Flachdichtung 22 gegen eine weitere Beilagscheibe 23. Über je ein Gewinde 16, 18 auf der Außenseite des Obertriebs 5 und der Innenseite der Schleuderscheibe 11 wird die Schleuderscheibe 11 am Obertrieb 5 befestigt und durch das Aufschrauben der Schleuderscheibe 11 gleichzeitig die Beilagscheibe 23 gegen die Flachdichtung 22 gepreßt. Aufgrund der elastisch komprimierbaren Materialeigenschaften der Flachdichtung 22 und der von distal und proximal ausgeübten Kräfte schmiegt sich die Flachdichtung 22 ohne Spaltenbildung an alle handstückfesten, nicht rotierenden Bauteile (Schraubring 7, Gleitlager 10, Beilagscheiben 23 und 24). Auch Beilagscheibe 23 rotiert nicht, da der Reibungswiderstand zwischen der Flachdichtung 22 aus Gummi und der metallenen Beilagscheibe 23 größer ist als zwischen der metallenen Schleuderscheibe 11 und der metallenen Beilagscheibe 23. Die beiden Beilagscheiben 23, 24 sind bevorzugt aus Metall gefertigt, insbesondere Beilagscheibe 23 besteht besonders bevorzugt aus Hartmetall. Alle Bauteile der Dichtung 20 (Feder 21, Flachdichtung 22 und Beilagscheiben 23, 24) sind von der Außenmantelfläche 19 des rotierenden Obertriebs 5 beabstandet, wodurch Abrieb oder Lärmentstehung vermieden werden. Der einzige Kontakt zwischen einem rotierenden und einem still stehendem Bauteil besteht zwischen der Beilagscheibe 23 und der Schleuderscheibe 11. Die Kontaktfläche zwischen diesen beiden Bauteilen ist jedoch sehr klein, so daß die Lärmentstehung gering ist. Durch die Wahl der Materialien, insbesondere bei der aus Hartmetall hergestellten Beilagscheibe 23, kann der Abrieb äußerst gering gehalten werden, wodurch auch bei längerem Einsatz der Dichtung 20 kein Spalt entsteht, durch den Verunreinigungen in das Innere der Winkelstückkopfs 1 eindringen können. Die erfindungsgemäße Dichtung 20 offenbart damit insbesondere in Kombination mit der Schleuderscheibe 11 eine einfache, langlebige und kostengünstige Abdichtung.
Der Aufbau der in Figur 3 dargestellten erfindungsgemäßen Dichtung 20 im Kopf 100 eines Winkelstücks zur spanabhebenden Bearbeitung von Gewebe entspricht jenem von Figur 1 und 2. Bei derartigen Winkelstücken wird jedoch eine deutlich höhere Drehzahl benötigt, so daß der Obertrieb 5 in Kopf 100 in Kugellagern gelagert wird (aufgrund der nur zum Teil entfernten Außenhülse 101 ist nur ein Kugellager 102 sichtbar), womit das als Lagersitz für zumindest einen Teil der Dichtung 20 dienende Gleitlager 10 fehlt. Statt dessen wird am proximalen Ende der Dichtung 20 eine Fixierscheibe 104 angeordnet, deren Schulter 104A die Flachdichtung 22 gegen die Schulter 14 des Schraubrings 7 klemmt. Der Fortsatz 104B dient der Feder 21 der Dichtung 20 als Lagersitz. In einer Ausnehmung 106 der Fixierscheibe 104 befindet sich eine Feder 105, die über eine Distanzscheibe 103 das Kugellager 102 vorspannt. Anhand dieses Ausführungsbeispiels ist zu erkennen, daß die erfindungsgemäße Dichtung 20 durch einfache Modifikationen universell bei Hand- und Winkelstücken aus unterschiedlichen Anwendungsgebieten eingesetzt werden kann.

Die Erfindung ist nicht auf das dargestellte Anwendungsgebiet und die beschriebenen Ausführungsbeispiele beschränkt, sondern umfaßt alle Ausführungsmöglichkeiten, die das prinzipielle, sinngemäßen Funktionsprinzip der Erfindung nicht verändern. Insbesondere sind Art und Form der Flachdichtung und der Beilagscheiben sowie Ort und Art der Lagerung der erfindungsgemäßen Dichtung variabel und den in unterschiedlichen Hand- oder Winkelstücken vorhandenen räumlichen Verhältnissen anzupassen.

## Patentansprüche

1. Dichtung (20) zum Abdichten von medizinischen Hand- oder Winkelstücken im Bereich des werkzeugseitigen Endes des Hand- oder Winkelstückkopfs (1, 100),
**gekennzeichnet durch**
eine Feder (21), die eine Flachdichtung (22) aus elastisch komprimierbarem Material, bevorzugt Gummi, gegen ein handstückfestes Bauteil (7) vorspannt und einer in unmittelbarer Nähe zur Dichtung (20) angeordneten Schleuderscheibe (11).

2. Dichtung (20) nach Anspruch 1,
**gekennzeichnet durch**
eine Beilagscheibe (23), bevorzugt aus Metall, besonders bevorzugt aus Hartmetall, die zwischen der Flachdichtung (22) und der Schleuderscheibe (11) angeordnet ist.

3. Dichtung (20) nach Anspruch 1 oder 2,
**dadurch gekennzeichnet, daß**
die Schleuderscheibe (11) die Flachdichtung (22) oder die Beilagscheibe (23) kontaktiert.

4. Dichtung (20) nach einem der vorhergehenden Ansprüche,
**gekennzeichnet durch**
eine Beilagscheibe (24), bevorzugt aus Metall, die zwischen der Feder (21) und der Flachdichtung (22) angeordnet ist.

5. Dichtung (20) nach einem der vorhergehenden Ansprüche,
**dadurch gekennzeichnet, daß**
die Schleuderscheibe (11) mit einer Welle (5) oder zumindest einem Teil der Werkzeugaufnahme (9) lösbar verbunden ist.

6. Medizinisches Hand- oder Winkelstück mit einer Außenhülse (2, 101), zumindest einer darin angeordneten Welle (3, 5) zum Antrieb eines in einer Werkzeugaufnahme (9) fixierten Behandlungswerkzeugs und einer Dichtung (20) zum Abdichten des medizinischen Handoder Winkelstücks im Bereich des werkzeugseitigen Endes des Hand- oder Winkelstückkopfs,
**gekennzeichnet durch**
eine Dichtung (20) gemäß einem der Ansprüche 1 bis 5.

7. Medizinisches Hand- oder Winkelstück nach Anspruch 6 mit einem Gleitlager (10) zur Lagerung der Welle (5) im Kopf des Hand- oder Winkelstücks,
**dadurch gekennzeichnet, daß**
die Feder (21) in einer Aussparung (13) des Gleitlagers (10) angeordnet ist.
